# EUROPEAN PATENT APPLICATION

(11) **EP 3 499 795 A1**
(43) Date of publication of application: **19.06.2019**
(21) Application number: 17839725.3
(22) Date of filing: 03.08.2017
(51) Int. Cl.: H04L 9/32, H04L 9/30, H04L 9/08

(54) **AUTHENTICATION SYSTEM AND METHOD, AND USER EQUIPMENT, AUTHENTICATION SERVER, AND SERVICE SERVER FOR PERFORMING SAME METHOD**

(30) Priority: 10.08.2016 KR 20160102019
(71) Applicant: Samsung SDS Co., Ltd., Seoul 05510 (KR)
(72) Inventor: LEE, Jung Do, Seoul 05510 (KR); CHO, Jae Hyuk, Seoul 05510 (KR); PARK, Sung Taek, Seoul 05510 (KR)
(74) Representative: Grünecker Patent- und Rechtsanwälte PartG mbB
(86) International application number: PCT/KR2017/008366
(87) International publication number: WO 2018/030707

(57) **Abstract**

Provided are an authentication system and method, and a user terminal, an authentication server, and a service server for performing the authentication method. According to embodiments of the present invention, a complex authentication procedure carried out in the conventional FIDO authentication technology is simplified using a second public key of which the integrity has been checked, so that a transaction occurring in an authentication procedure can be minimized. Such an authentication method is advantageously suitable to provide a service requiring fast authentication, such as security buying and selling or futures trading.

## Description

### [Technical Field]

Embodiments of the present invention relate to Fast Identity Online (FIDO) authentication technology.

### [Background Art]

Fast identity online (FIDO) authentication refers to a technology of authenticating a user using user's biometric information, such as fingerprint, iris, and face information. FIDO authentication is more secure and easier than existing authentication methods that use user's ID and password.

Generally, in the case of the FIDO authentication technology, a user terminal authenticates user's biometric information and generates a signature value by digitally signing the result of the authentication with a FIDO private key, and a FIDO server verifies the signature value with a FIDO public key and transmits the result of the verification to a service server. Thus, according to the conventional FIDO authentication technology, a significant amount of time is required in the login and authentication procedure of the user. Particularly, according to the conventional FIDO authentication technology, the transactions between the above-described user terminal, the service server, and the FIDO server are repeatedly performed at each authentication, and hence there is a difficult in providing a service (e.g., buying and selling of securities, futures trading, or the like) that requires fast authentication.

In addition, as another authentication method, a digital signature technology in which order data is digitally signed with a private key of an authorized certificate stored in a user terminal and the signed order data is verified in a server is used. However, the digital signature technology using an authorized certificate may have a risk of exposure of a private key of the authorized certificate stored in a memory. In general, since the authorized certificate has a long validity period (one year), significant damage may occur when the private key is exposed.

### [Disclosure]

### [Technical Problem]

Embodiments of the present invention are intended to simplify a Fast Identity Online (FIDO) authentication procedure and to enhance security of digital signature.

### [Technical Solution]

According to one exemplary embodiment of the present invention, there is provided an authentication system including: an authentication server configured to generate a random number in response to an authentication request of a user; a user terminal configured to receive the random number from the authentication server, generate a pair of a second private key and a second public key that are distinguished from previously issued first private key and first public key, and generate a first signature value by digitally singing an authentication message including the random number and the second public key with the first private key; and a service server configured to receive the authentication message, the first signature value and the second public key from the user terminal, wherein the authentication server is further configured to check integrity of the second public key by verifying the first signature value using the first public key, and in the event of a next authentication request of the user, the service server is further configured to perform authentication of a message related to the next authentication request using the second public key.

In the event of the next authentication request of the user, the user terminal may be further configured to generate a second signature value by digitally signing a message preamble related to the next authentication request and transmit the message preamble and the second signature value to the service server, and the service server may be further configured to authenticate the message by verifying the second signature value using the second public key.

The user terminal may be further configured to delete the pair of the second private key and the second public key in response to an authentication request for the user to log out and generate a new pair of a second private key and a second public key in response to an authentication request for the user to log in.

The service server may be further configured to delete the second public key in response to an authentication request for the user to log out.

According to another exemplary embodiment of the present invention, there is provided a user terminal including: a service module configured to receive a random number from an authentication server in response to an authentication request of a user and generate a pair of a second private key and a second public key that are distinguished from previously issued first private key and first public key; and an authenticator configured to generate a first signature value by digitally signing an authentication message including the random number and the second public key with the first private key, wherein the service module is further configured to transmit the authentication message, the first signature value, and the second public key to the authentication server, and when a message indicating that verification of the first signature value is completed is received from the authentication server, generate a second signature value by digitally signing a message preamble related to a next authentication request with the second private key in response to the next authentication request from the user.

The service module may be further configured to delete the pair of the second private key and the second public key in response to an authentication request for the user to log out and may generate a new pair of a second private key and a second public key in response to an authentication request for the user to log in.

According to still another exemplary embodiment of the present invention, there is provided an authentication server configured to receive an authentication message, a first signature value and a second public key from the user terminal and check integrity of the second public key by verifying the first signature value using a previously issued first public key.

According to yet another exemplary embodiment of the present invention, there is provided a service server configured to receives a second public key, a message preamble and a second signature value from the user terminal and verify the second signature value using the second public key.

The service server may be further configured to delete the second public key in response to an authentication request for the user to log out.

According to still another exemplary embodiment of the present invention, there is provided an authentication method including: generating, at an authentication server, a random number in response to an authentication request of a user; receiving, at a user terminal, the random number from the authentication server; generating, at the user terminal, a pair of a second private key and a second public key that are distinguished from previously issued first private key and first public key; generating, at the user terminal, a first signature value by digitally signing an authentication message including the random number and the second public key with the first private key; receiving, at the service server, the authentication message, the first signature value, and the second public key from the user terminal and transmitting the authentication message, the first signature value, and the second public key to the authentication server; checking, at the authentication server, integrity of the second public key by verifying the first signature value using the first public key; and in the event of a next authentication request of the user, performing, at the service server, authentication of a message related to the next authentication request using the second public key.

The authentication method may further include, prior to the performing of the authentication of the message, in the event of the next authentication request of the user, generating, at the user terminal, a second signature value by digitally signing a message preamble related to the next authentication request with the second private key and transmitting, at the user terminal, the message preamble and the second signature value to the service server, wherein the authentication of the message is performed by verifying the second signature value using the second public key.

The authentication method may further include, subsequent to the performing of the authentication of the message, deleting, at the user terminal, the pair of the second private key and the second public key in response to an authentication request for the user to log out and generating, at the user terminal, a new pair of a second private key and a second public key in response to an authentication request for the user to log in.

The authentication method may further include, subsequent to the performing of the authentication of the message, deleting, at the service server, the second public key in response to an authentication request for the user to log out.

According to still another exemplary embodiment of the present invention, there is provided an authentication method including: receiving, at a service module, a random number from an authentication server in response to an authentication request of a user; generating, at the service module, a pair of a second private key and a second public key that are distinguished from previously issued first private key and first public key; generating, at an authenticator, a first signature value by digitally signing an authentication message including the random number and the second public key with the first private key; transmitting, at the service module, the authentication message, the first signature value, and the second public key to the authentication server; and when a message indicating that verification of the first signature value is completed is received from the authentication server, generating, at the service module, a second signature value by digitally signing a message preamble related to a next authentication request with the second private key in response to the next authentication request from the user.

The authentication method may further include deleting, at the service module, the pair of the second private key and the second public key in response to an authentication request for the user to log out and generating, at the service module, a new pair of a second private key and a second public key in response to an authentication request for the user to log in.

### [Advantageous Effects]

According to embodiments of the present invention, a transaction occurring in the authentication process can be minimized by simplifying a complex authentication procedure of a conventional Fast Identity Online (FIDO) authentication technology using a second public key of which the integrity has been checked. Such an authentication method is advantageously suitable to provide a service, such as buying and selling of securities or futures trading, which requires fast authentication.

In addition, according to embodiments of the present invention, a pair of a second private key and a second public key for simplified authentication is deleted at each logout and is newly generated at each login so that an authentication procedure can be carried out in a more secure way, compared to an existing authorized certificate having a very long validity period.

### [Description of Drawings]

FIG. 1 is a block diagram illustrating a detailed configuration of an authentication system according to one embodiment of the present invention.
FIG. 2 is a block diagram illustrating a detailed configuration of a user terminal according to one embodiment of the present invention.
FIG. 3 is a flowchart illustrating a login procedure according to a first embodiment of the present invention.
FIG. 4 is a flowchart illustrating a login procedure according to a second embodiment of the present invention.
FIG. 5 is a flowchart illustrating an authentication procedure according to one embodiment of the present invention.
FIG. 6 is a flowchart illustrating a procedure for deleting a pair of a second private key and a second public key according to a first embodiment of the present invention.
FIG. 7 is a flowchart illustrating a procedure for deleting a pair of a second private key and a second public key according to a second embodiment of the present invention.
FIG. 8 is a diagram illustrating an exemplary scenario of a login procedure according to a general Fast Identity Online (FIDO) authentication method.
FIG. 9 is a diagram illustrating an exemplary scenario of an authentication procedure according to a general FIDO authentication method.
FIG. 10 is a diagram illustrating an exemplary scenario of a login procedure according to one embodiment of the present invention.
FIG. 11 is a diagram illustrating an exemplary scenario of an authentication procedure according to one embodiment of the present invention.
FIG. 12 is a block diagram for describing a computing environment including a computing device suitable to use in exemplary embodiments.

### [Modes of the Invention]

The following description is provided to assist the reader in gaining a comprehensive understanding of the methods, apparatuses, and/or systems described herein. Accordingly, various changes, modifications, and equivalents of the methods, apparatuses, and/or systems described herein will be suggested to those of ordinary skill in the art.

Descriptions of well-known functions and constructions may be omitted for increased clarity and conciseness. Also, terms described in below are selected by considering functions in the embodiment and meanings may vary depending on, for example, a user or operator's intentions or customs. Therefore, definitions of the terms should be made on the basis of the overall context. The terminology used in the detailed description is provided only to describe embodiments of the present disclosure and not for purposes of limitation. Unless the context clearly indicates otherwise, the singular forms include the plural forms. It should be understood that the terms "comprises" or "includes" specify some features, numbers, steps, operations, elements, and/or combinations thereof when used herein, but do not preclude the presence or possibility of one or more other features, numbers, steps, operations, elements, and/or combinations thereof in addition to the description.

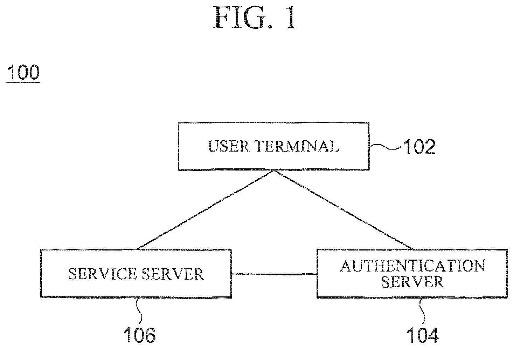

FIG. 1 is a block diagram illustrating a detailed configuration of an authentication system 100 according to one embodiment of the present invention. As shown in FIG. 1, the authentication system 100 according to one embodiment of the present invention is a system for authenticating digital signature through a previously issued first private key and a first public key and includes a user terminal 102, an authentication server 104, and a service server 106. In the embodiments, the first private key may be, for example, a Fast Identity Online (FIDO) private key and the first public key may be, for example, a FIDO public key. The first private key and the first public key may be generated by the user terminal 102 and the first public key may be distributed to the authentication server 104.

The user terminal 102 is a device used to be provided with various services (for example, a securities trading service, such as buying and selling of securities, and a bank transaction service, such as a bank transfer, a balance inquiry, a transaction history inquiry, and the like), and may be, for example, a desktop computer, a notebook computer, a tablet computer, a smartphone, a personal digital assistant (PDA), a wearable device, such as a smart watch, or the like. The user terminal 102 may perform an authentication procedure for a user before providing the service to the user. In the embodiments, the authentication procedure may be carried out through a FIDO authentication method. FIDO authentication refers to a technology for authenticating a user using the user's biometric information, such as fingerprint, iris, face information, and the like.

To this end, the user terminal 102 may receive a login request (or an authentication request for the login) for the service server 106 or a service module (not shown) provided by the service server 106 from the user. The service module may be application software installed in the user terminal 102 and the user may be provided with various services from the service server 106 through the service module. The user terminal 102 may receive a one-time random number from the authentication server 104 in response to the authentication request from the user and generate a pair of a second private key and a second public key, which are distinguished from the previously issued first private key and first public key. The random number may be formed by one or more numbers, characters, or a combination thereof, and may be generated by the service server 106 and transmitted to the user terminal 102. In addition, as described below, the second private key and the second public key are a key pair to be used in an authentication procedure for allowing the user to use a service (e.g., a securities trading service, a bank transaction service, or the like) and may be used as a means for simplifying the authentication procedure. The user terminal 102 may generate the second private key and the second public key and store them in an internal memory (not shown) of the user terminal 102 or store them using a separate hardware security module (e.g., trusted execution environment (TEE), secure element (SE) (embedded SE (eSE), universal subscriber identity module (USIM), MSD, or the like), a software security module (e.g., white box cryptography (WBC), or the like), or the like. The pair of the second private key and the second public key may be a temporary key pair that is deleted each time the user logs out and is newly generated each time the user logs in.

In addition, the user terminal 102 may generate a first signature value by digitally signing an authentication message containing the random number and the second public key with the previously issued first private key, and transmit the authentication message, the first signature value, and the second public key to the service server 106. Specifically, the user terminal 102 may authenticate the user's biometric information through an authenticator (not shown), such as a fingerprint sensor, a face recognizer, or the like, and generate the first signature value by including the random number and the second public key in the authentication message that indicates the authentication result and then digitally signing the authentication message with the first private key. In one example, the user terminal 102 may acquire a first hash value by hashing the authenticating message including the random number and the second public key and generate the first signature value by encrypting the first hash value with the first private key. The authenticator may be embedded in or attached to the user terminal 102 or may be formed as a separate device from the user terminal 102. In addition, the authenticator may issue the above-described pair of the first private key and the first public key before the digital signing. In this case, the issued first public key may be distributed to the authentication server 104.

The authentication server 104 may authenticate the user and check (or verify) the integrity of the second public key. The authentication server 104 may be, for example, a FIDO server. The authentication server 104 may generate a random number in response to receiving the authentication request of the user from the user terminal 102, and transmit the generated random number to the user terminal 102. As described above, the user terminal 102 may authenticate biometric information of the user through the authenticator, include the random number and the second public key in the authentication message that indicates the authentication result, and then digitally sign the authentication message with the first private key.

Then, the authentication server 104 may receive the authentication message, the first public key, and the second public key from the service server 106 and verify the first signature value, thereby authenticating the user and at the same time checking the integrity of the second public key. In one example, the authentication server 104 may acquire the above-described first hash value by decrypting the first signature value using the previously issued first public key (i.e., a public key corresponding to the first private key) and acquire a second hash value by hashing the authentication message (i.e., original signature). The authentication server 104 may compare the first hash value and the second hash value, and when the first hash value is identical to the second hash value, may determine that the verification of the first signature value is completed.

When verification of the first signature value is completed, the authentication server 104 may transmit a verification completion message to the service server 106. The service server 106 may transmit the verification completion message to the user terminal 102, and in this case, the user's login procedure is completed. When verification of the first signature value fails, the authentication server 104 may transmit a verification failure message to the service server 106.

The service server 106 is a device that provides various services, such as a securities trading service, a bank transaction service, and the like, to the user terminal 102, and may be, for example, a securities company server, a bank server, a credit card company server, an insurance company server, or the like. The user terminal 102 may be provided with a service module from the service server 106 and be provided with various services from the service server 106 through the service module. In addition, the user terminal 102 may transmit the authentication message, the first signature value, and the second public key to the service server 106, and the service server 106 may transmit the authentication message, the first signature value, and the second public key to the authentication server 104. As described above, the authentication server 104 may verify the first signature value to check the integrity of the second public key and transmit the verification completion message to the service server 106. When verification of the first signature value is completed in the authentication server 104 (i.e., when the service server 106 receives the verification completion message from the authentication server 104), the service server 106 may store the second public key. Thereafter, in the event of the next authentication request of the user, the service server 106 may perform authentication of a message related to the next authentication request using the second public key stored in the service server 106.

In the embodiments, the next authentication is a simple authentication procedure using the second private key and the second public key, which is advantageous in that it is fast and safe compared to conventional FIDO authentication. The next authentication may be performed after the verification of the first signature value is completed, and may be an authentication procedure for, for example, a user to receive a service, such as securities buying, securities selling, or the like, from the service server 106.

Specifically, in the event of the next authentication request of the user, the user terminal 102 may generate a second signature value by digitally signing a message preamble related to the next request (e.g., a message preamble indicating securities buying) with the second private key and transmit the message preamble and the second signature value to the service server 106. The service server 106 may perform authentication of the message related to the next authentication request by verifying the second signature value using the stored second public key (i.e., the second public key of which the integrity has been checked). When the next authentication is completed, the service server 106 may transmit an authentication result to the user terminal 102. That is, according to the embodiments of the present invention, a complex authentication procedure of the conventional FIDO authentication technology is simplified using the second public key of which the integrity has been checked so that a transaction occurring in the authentication process can be minimized. Such an authentication method is advantageously suitable to provide a service, such as buying and selling of securities or futures trading, which requires fast authentication.

In addition, the pair of the second private key and the second public key may be deleted each time the user logs out and may be newly generated each time the user logs in. Specifically, the user terminal 102 may delete the pair of the second private key and the second public key in response to an authentication request for the user to log out, and may generate a new pair of a second private key and a second public key in response to an authentication request for the user to log in. In addition, the service server 106 may delete the second public key stored in the service server 106 in response to an authentication request for the user to log out. That is, according to the embodiments of the present invention, the pair of the second private key and the second public key for simplified authentication may be deleted at each logout and may be newly generated at each login so that an authentication procedure can be carried out in a more secure way, compared to an existing authorized certificate having a very long validity period.

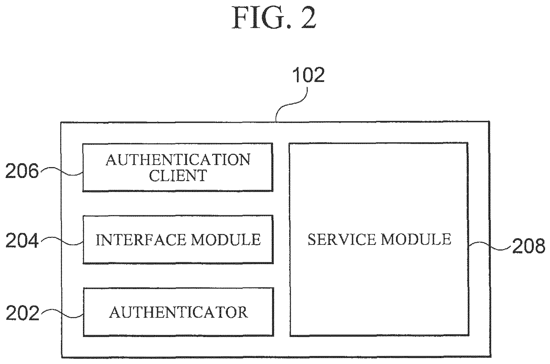

FIG. 2 is a block diagram illustrating a detailed configuration of a user terminal 102 according to one embodiment of the present invention. As shown in FIG. 2, the user terminal 102 according to one embodiment of the present invention includes an authenticator 202, an interface module 204, an authentication client 206, and a service module 208.

The authenticator 202 is a device to be used in authenticating biometric information of a user, and may be, for example, a fingerprint sensor, a face recognizer, an iris recognition device, a speech recognition device, or the like. The authenticator 202 may be embedded in or attached to the user terminal 102, but is not limited thereto, such that the authenticator 202 may be configured as a separate device from the user terminal 102. In addition, the authenticator 202 may issue a pair of a first private key (e.g., a FIDO private key) and a first public key (e.g., a FIDO public key). The first private key may be stored in, for example, an internal database (not shown) of the authenticator 202 and the first public key may be distributed to the authentication server 104.

In addition, the authenticator 202 may authenticate the user's biometric information and generate a first signature value by including a random number and a second public key in an authentication message that indicates the authentication result and digitally signing the authentication message with the first private key. Then, the authenticator 202 may transmit the authentication message and the first signature value to the authentication client 206 through the interface module 204.

The interface module 204 is a module that relays data between the authenticator 202 and the authentication client 206, and may be, for example, an authenticator specific module (ASM). The authentication client 206 may transmit the random number and the second public key to the authenticator 202 through the interface module 204 and the authenticator 202 may include the random number and the second public key in the authentication message and then digitally signs the authentication message with the first private key. In addition, the authenticator 202 may transmit the authentication message and the first signature value to the authentication client 206 through the interface module 204 and the authentication client 206 may transmit the authentication message and the first signature value to the service module 208.

The authentication client 206 is a module which verifies the validity (or reliability) of the service module 208 and requests the authenticator 202 to authenticate the user, and may be, for example, a FIDO client. The authentication client 206 may issue a request for a FacetID list of the service module 208 (e.g., a binary hash value of the service module 208) to the authentication server 104 through the service server 106 and receive the FacetID list from the authentication server 104 to verify the validity of the service module 208. When it is determined that the service module 208 is valid, the authentication client 206 may request the authenticator to authenticate the user. In this case, the authentication client 206 may transmit the random number and the second public key received from the service module 208 through the interface module 204 to the authenticator 202.

The service module 208 is application software provided by the service server 106 and may be, for example, a securities company application, a bank application, or the like. The service module 208 may receive a random number from the authentication server 104 in response to a login request of the user. In addition, the service module 208 may generate a pair of a second private key and a second public key and request the authentication client 206 to authenticate the user while transmitting the random number and the second public key to the authentication client 206. Then, the service module 208 may receive the authentication message and the first signature value from the authentication client 206 and transmit the authentication message, the first signature value, and the second public key to the service server 106.

In addition, the service module 208 may receive a verification completion message for the first signature value from the service server 106. Then, in the event of the next authentication request of the user, the service module 208 may generate a second signature value by digitally signing a message preamble related to the next authentication request with the second private key and transmit the message preamble and the second signature value to the service server 106. As described above, the service server 106 may perform authentication of a message related to the next authentication request by verifying the second signature value using the stored second public key.

In addition, the service module 208 may delete the pair of the second private key and the second public key in response to an authentication request for the user to log out. Then, when the user newly requests authentication for login, the service module 208 may generate a new pair of a second private key and a second public key.

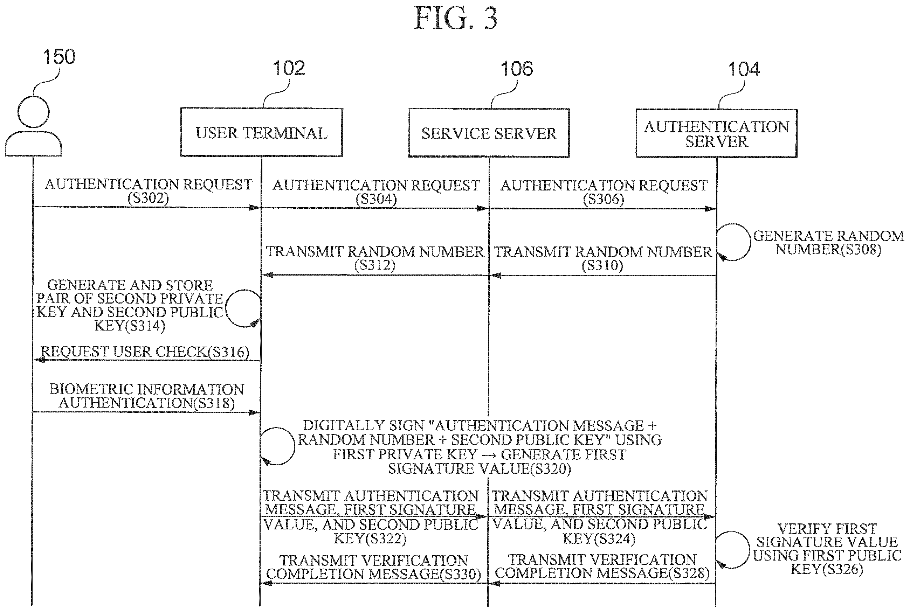

Hereinafter, a login procedure and an authentication procedure according to embodiments of the present invention will be described in detail with reference to FIGS. 3 to 7.

FIG. 3 is a flowchart illustrating a login procedure according to a first embodiment of the present invention. Although in the illustrated flowcharts, one procedure is described as being divided into a plurality of operations, at least some of the operations may be performed in different order or may be combined into fewer operations or further divided into more operations. In addition, some of the operations may be omitted, or one or more extra operations, which are not illustrated, may be added to the flowchart and be performed.

First, a user terminal 102 receives, from a user, an authentication request (i.e., an initial authentication request) for the user to log in (S302). The user terminal 102 may receive the authentication request from the user through a service module 208.

Then, the user terminal 102 transmits the authentication request to a service server 106 (S304).

Then, the service server 106 transmits the authentication request to an authentication server 104 (S306).

Then, the authentication server 104 generates a random number in response to the authentication request (S308). The random number may be formed by, for example, one or more numbers, characters, or a combination thereof.

Then, the authentication server 104 transmits the random number to the service server 106 (S310). In this case, the authentication server 104 may transmit a policy for selection of an authenticator 202 to the service server 106, together with the random number. The policy may include information on an authenticator 202 to be used in an authentication process of the user's biometric information.

Then, the service server 106 transmits the random number to the user terminal 102 (S312). In this case, the service server 106 may transmit the policy for selection of the authenticator 202 to the user terminal 102 together with the random number. The user terminal 102 may select an authenticator 202 to be used in authenticating biometric information from among one or more authenticators 202 by referring to the policy. However, the process of transmitting the policy and the process of selecting the authenticator 202 in accordance with the policy may be omitted as needed, and the authenticator 202 to be used in authenticating the biometric information may be set in advance.

Then, the user terminal 102 generates and stores a pair of a second private key and a second public key (S314). As described above, the second private key and the second public key is a key pair to be used in an authentication procedure for the user to use a service (e.g., securities trading, a bank transaction service, or the like), and may be used as a means for simplifying the authentication procedure. The user terminal 102 may generate the second private key and the second public key and store them in an internal memory of the user terminal 102 or store them using a separate hardware security module, a software security module, or the like.

Then, the user terminal 102 requests the user to check the biometric information (S316). In one example, the user terminal 102 may output a guidance message for fingerprint input.

Then, the user terminal 102 authenticates the user's biometric information (S318). In one example, the user terminal 102 may receive fingerprint information from the user and authenticate the fingerprint information.

Then, the user terminal 102 generates a first signature value by including the random number and the second public key in an authentication message that indicates the authentication result and digitally signing the authentication message with the first private key (e.g., a FIDO private key) (S320). In one example, the user terminal 102 may acquire a first hash value by hashing the authentication message including the random number and the second public key and generate the first signature value by encrypting the first hash value with the first private key.

Then, the user terminal 102 transmits the authentication message, the first signature value, and the second public key to the service server 106 (S322).

Then, the service server 106 transmits the authentication message, the first signature value, and the second public key to the authentication server 104 (S324).

Then, the authentication server 104 verifies the first signature value using the first public key (S326). In one example, the authentication server 104 may decrypt the first signature value using the previously issued first public key (i.e., a public key corresponding to the first private key), thereby acquiring the above-described first hash value, and may acquire a second hash value by hashing the authentication message (i.e., original signature). The authentication server 104 may compare the first hash value and the second hash value, and when the first hash value and the second hash value are identical to each other, may determine that verification of the first signature value is completed. As such, the authentication server 104 may verify the first signature value, thereby authenticating the user and at the same time checking the integrity of the second public key.

When verification of the first signature value is completed, the authentication server 104 transmits a verification completion message to the service server 106 (S328). At this time, the authentication server 104 may transmit the second public key of which the integrity has been checked to the service server 106 together with the verification completion message. In this case, the service server 106 may store the second public key. When verification of the first signature value fails, the authentication server 104 may transmit a verification failure message to the service server 106. In this case, the service server 106 does not store the second public key.

Finally, the service server 106 may transmit the verification completion message to the user terminal 102 and accordingly the login procedure of the user is completed (S330).

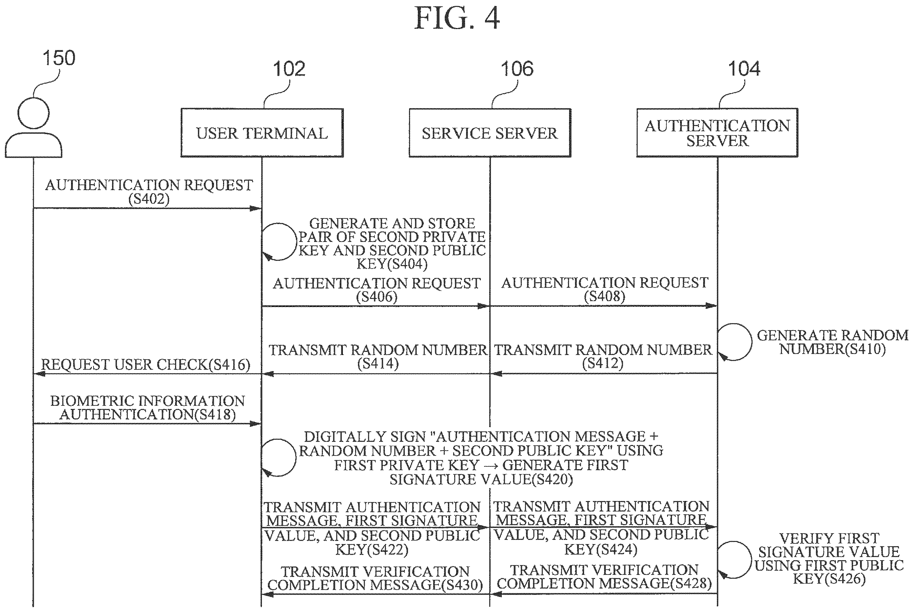

FIG. 4 is a flowchart illustrating a login procedure according to a second embodiment of the present invention. The login procedure according to the second embodiment of the present invention is substantially the same as the login procedure according to the first embodiment described in FIG. 3 except that operation S404 in which the user terminal 102 generates and stores a pair of a second private key and a second public key is performed immediately after operation S402 in which a user requests authentication.

As such, timing at which the user terminal 102 generates and stores a pair of a second private key and a second public key is not particularly limited and any timing will do as long as the pair of the second private key and the second public key is generated and stored only before the generation of a first signature value.

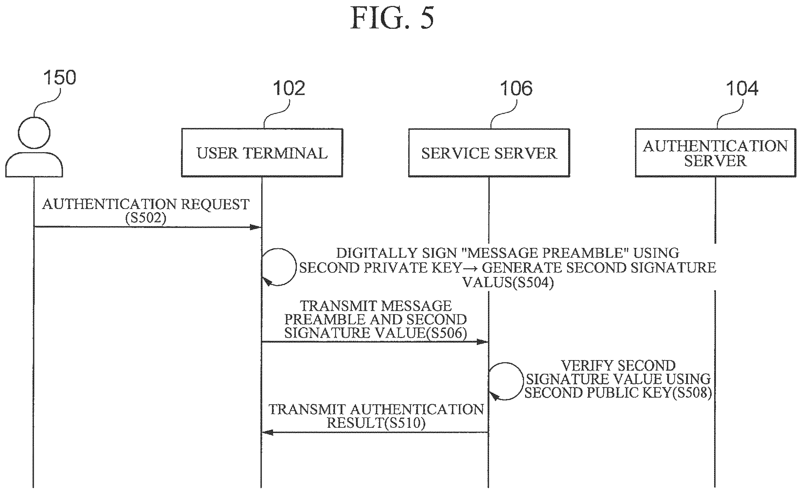

FIG. 5 is a flowchart illustrating an authentication procedure according to one embodiment of the present invention.

First, a user terminal 102 receives an authentication request (i.e., an authentication request after an initial authentication request for a user to log in) from the user (S502). In one example, the user who has logged in may input the authentication request (e.g., click a securities buying menu) in order to be provided with a service such as securities buying, securities selling, or the like.

Then, the user terminal 102 generates a second signature value by digitally signing a message preamble related to the authentication request with a second private key in response to the authentication request of the user (S504). Here, the message preamble may be, for example, a message preamble indicating securities buying, a message preamble indicating securities selling, a message preamble indicating futures trading, or the like.

Then, the user terminal 102 transmits the message preamble and the second signature value to a service server 106 (S506).

Then, the service server 106 verifies the second signature value using the second public key stored in the service server 106 (S508).

When verification of the second signature value is completed, the service server 106 transmits an authentication result including an authentication completion message to the user terminal 102 (S510). Accordingly, the above-described authentication procedure is completed.

When verification of the second signature value fails, the service server 106 may transmit an authentication result including an authentication failure message to the user terminal 102. In this case, operations S502 to S508 may be repeatedly performed.

As such, according to the embodiments of the present invention, it is possible to simplify a complex authentication procedure of a conventional FIDO authentication technology using a second public key of which the integrity has been checked and, accordingly, to minimize a transaction occurring in the authentication process.

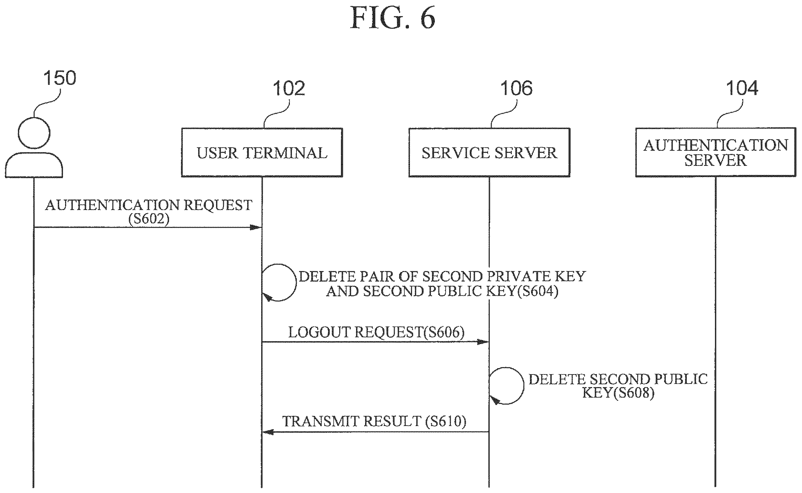

FIG. 6 is a flowchart illustrating a procedure for deleting a pair of a second private key and a second public key according to a first embodiment of the present invention.

First, the user terminal 102 receives, from a user, an authentication request for the user to log out (S602). In one example, the user who is provided with a service, such as securities buying, securities selling, or the like, may input (e.g., click a logout menu) the authentication request in order to log out.

Then, the user terminal 102 deletes a pair of a second private key and a second public key in response to the authentication request (S604).

Then, the user terminal 102 transmits a logout request of the user to a service server 106 (S606).

Then, the service server 106 deletes a second public key stored in the service server 106 (S608).

Finally, the service server 106 transmits a deletion completion message to the user terminal 102 indicating that deletion of the second public key is completed (S610).

As such, according to the embodiments of the present invention, a pair of a second private key and a second public key for simplified authentication is to be deleted at each logout, thereby making it possible to enhance the security of the above-described digital signature.

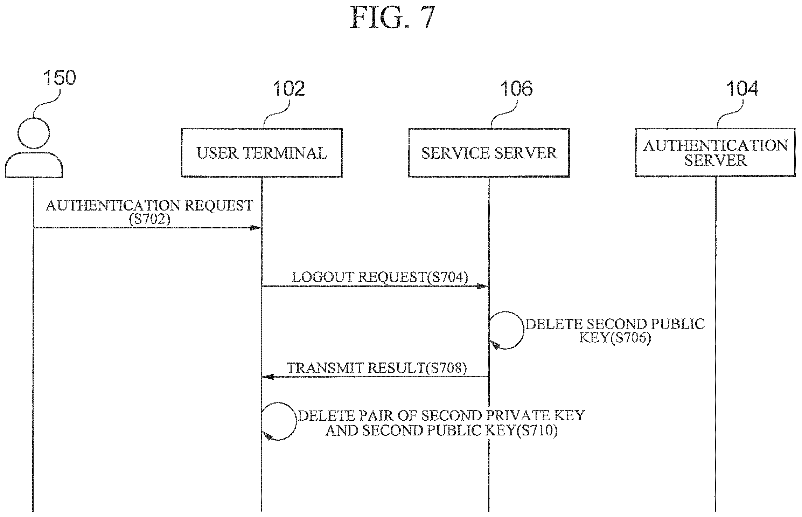

FIG. 7 is a flowchart illustrating a procedure for deleting a pair of a second private key and a second public key according to a second embodiment of the present invention.

First, a user terminal 102 receives, from a user, an authentication request for the user to log out (S702).

Then, the user terminal 102 transmits a logout request of the user to a service server 106 (S704).

Then, the service server 106 deletes a second public key stored in the service server 106 (S706).

Then, the service server 106 transmits a deletion completion message to the user terminal 102 indicating that deletion of the second public key is completed (S708).

Finally, the user terminal 102 deletes a pair of a second private key and a second public key in response to receiving the deletion completion message from the service server 106 (S710).

As such, the user terminal 102 may delete a pair of the second private key and the second public key in response to the authentication request for logout from the user, or may delete the pair of the second private key and the second public key in response to receiving the message from the service server 106 indicating that deletion of the second public key is completed.

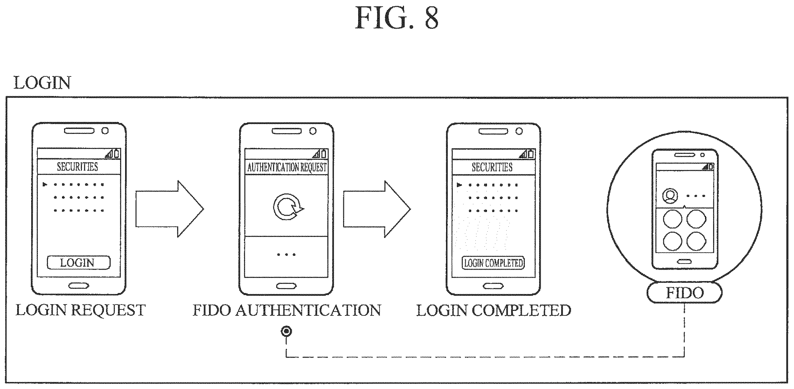

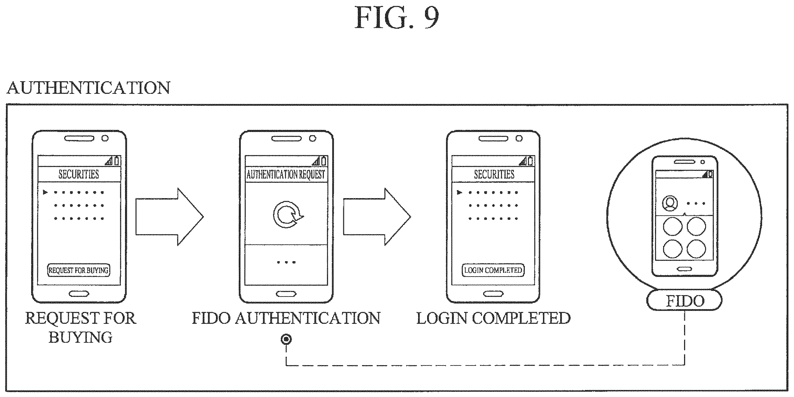

FIG. 8 is a diagram illustrating an exemplary scenario of a login procedure according to a general FIDO authentication method, and FIG. 9 is a diagram illustrating an exemplary scenario of an authentication procedure according to a general FIDO authentication method.

As shown in FIGS. 8 and 9, according to a general FIDO authentication method, a FIDO authentication procedure performed in a user's login procedure is performed identically in an authentication procedure for securities buying. That is, according to the general FIDO authentication method, a authentication request of a user, random number generation of an authentication server 104, biometric information authentication of an authenticator 202, digital signing by the authenticator 202, and a procedure of the authenticator 104 to verify a signature value and transmit a result are disadvantageously performed at every authentication.

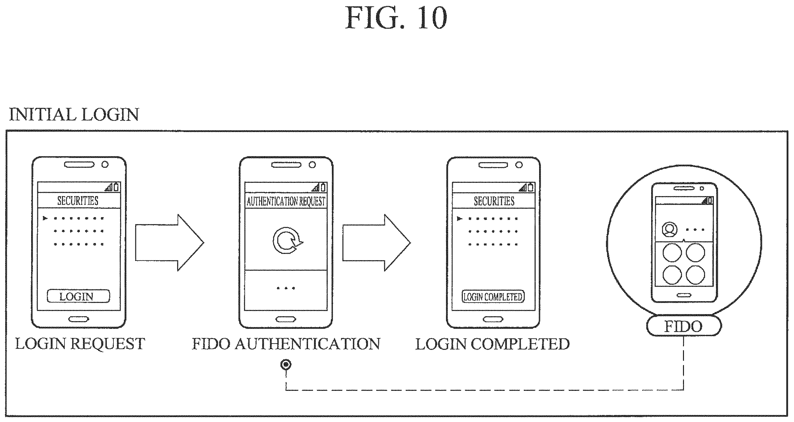

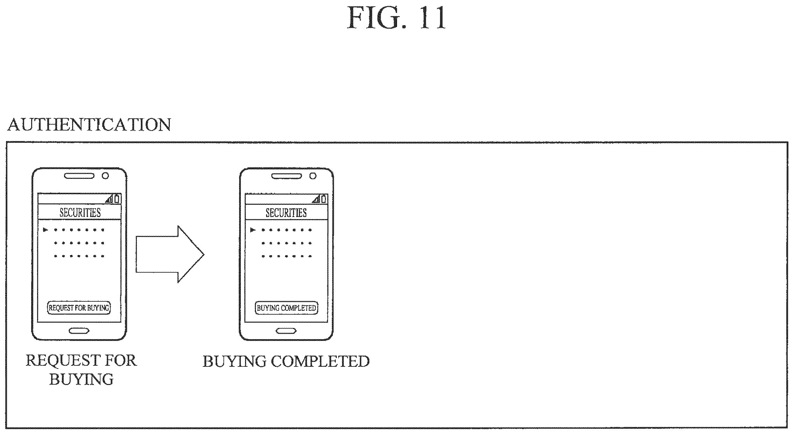

FIG. 10 is a diagram illustrating an exemplary scenario of a login procedure according to one embodiment of the present invention, and FIG. 11 is a diagram illustrating an exemplary scenario of an authentication procedure according to one embodiment of the present invention.

As shown in FIGS. 10 and 11, according to an authentication method in accordance with the embodiments of the present invention, when a login procedure of a user through FIDO authentication is completed, a simplified authentication procedure using a second private key and a second public key may be performed in the event of a user's request for buying securities. In this case, a transaction occurring in the authentication process may be minimized, and accordingly, the time taken to complete the authentication may be significantly reduced.

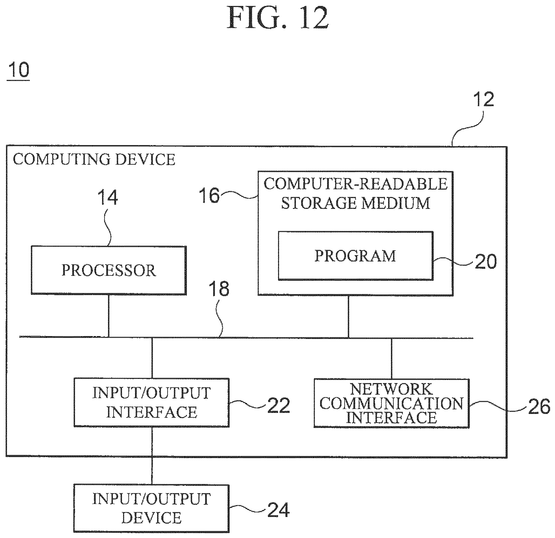

FIG. 12 is a block diagram for describing a computing environment including a computing device suitable to use in exemplary embodiments. In the illustrated embodiment, each of the components may have functions and capabilities different from those described hereinafter and additional components may be included in addition to the components described herein.

The illustrated computing environment 10 includes a computing device 12. In one embodiment, the computing device 12 may be an authentication system 100, or one or more components included in the authentication system 100.

The computing device 12 includes at least one processor 14, a computer-readable storage medium 16, and a communication bus 18. The processor 14 may cause the computing device 12 to operate according to the aforementioned exemplary embodiment. For example, the processor 14 may execute one or more programs stored in the computer-readable storage medium 16. The one or more programs may include one or more computer executable commands, and the computer executable commands may be configured to, when executed by the processor 14, cause the computing device 12 to perform operations according to the exemplary embodiment.

The computer-readable storage medium 16 is configured to store computer executable commands and program codes, program data, and/or information in other suitable forms. The programs stored in the computer readable storage medium 16 may include a set of commands executable by the processor 14. In one embodiment, the computer-readable storage medium 16 may be a memory (volatile memory, such as random access memory (RAM), non-volatile memory, or a combination thereof) one or more magnetic disk storage devices, optical disk storage devices, flash memory devices, storage media in other forms capable of being accessed by the computing device 12 and storing desired information, or a combination thereof.

The communication bus 18 connects various other components of the computing device 12 including the processor 14 and the computer readable storage medium 16.

The computing device 12 may include one or more input/output interfaces 22 for one or more input/output devices 24 and one or more network communication interfaces 26. The input/output interface 22 and the network communication interface 26 are connected to the communication bus 18. The input/output device 24 may be connected to other components of the computing device 12 through the input/output interface 22. The illustrative input/output device 24 may be a pointing device (a mouse, a track pad, or the like), a keyboard, a touch input device (a touch pad, a touch screen, or the like), an input device, such as a voice or sound input device, various types of sensor devices, and/or a photographing device, and/or an output device, such as a display device, a printer, a speaker, and/or a network card. The illustrative input/output device 24 which is one component constituting the computing device 12 may be included inside the computing device 12 or may be configured as a separate device from the computing device 12 and connected to the computing device 12.

A number of examples have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

## Claims

1. An authentication system comprising:
an authentication server configured to generate a random number in response to an authentication request of a user;
a user terminal configured to receive the random number from the authentication server, generate a pair of a second private key and a second public key that are distinguished from previously issued first private key and first public key, and generate a first signature value by digitally singing an authentication message including the random number and the second public key with the first private key; and
a service server configured to receive the authentication message, the first signature value and the second public key from the user terminal,
wherein the authentication server is further configured to check integrity of the second public key by verifying the first signature value using the first public key, and
in the event of a next authentication request of the user, the service server is further configured to perform authentication of a message related to the next authentication request using the second public key.

2. The authentication system of claim 1, wherein
in the event of the next authentication request of the user, the user terminal is further configured to generate a second signature value by digitally signing a message preamble related to the next authentication request and transmit the message preamble and the second signature value to the service server, and
the service server is further configured to authenticate the message by verifying the second signature value using the second public key.

3. The authentication system of claim 1, wherein the user terminal is further configured to delete the pair of the second private key and the second public key in response to an authentication request for the user to log out and generate a new pair of a second private key and a second public key in response to an authentication request for the user to log in.

4. The authentication system of claim 1, wherein the service server is further configured to delete the second public key in response to an authentication request for the user to log out.

5. A user terminal comprising:
a service module configured to receive a random number from an authentication server in response to an authentication request of a user and generate a pair of a second private key and a second public key that are distinguished from previously issued first private key and first public key; and
an authenticator configured to generate a first signature value by digitally signing an authentication message including the random number and the second public key with the first private key,
wherein the service module is further configured to transmit the authentication message, the first signature value and the second public key to the authentication server, and when a message indicating that verification of the first signature value is completed is received from the authentication server, generate a second signature value by digitally signing a message preamble related to a next authentication request with the second private key in response to the next authentication request from the user.

6. The user terminal of claim 5, wherein the service module is further configured to delete the pair of the second private key and the second public key in response to an authentication request for the user to log out and generate a new pair of a second private key and a second public key in response to an authentication request for the user to log in.

7. An authentication server configured to receive an authentication message, a first signature value and a second public key from the user terminal set forth in one of claims 5 and 6 and check integrity of the second public key by verifying the first signature value using a previously issued first public key.

8. A service server configured to receive a second public key, a message preamble and a second signature value from the user terminal set forth in one of claims 5 and 6, and verify the second signature value using the second public key.

9. The service server of claim 8 is further configured to delete the second public key in response to an authentication request for the user to log out.

10. An authentication method comprising:
generating, at an authentication server, a random number in response to an authentication request of a user;
receiving, at a user terminal, the random number from the authentication server;
generating, at the user terminal, a pair of a second private key and a second public key that are distinguished from previously issued first private key and first public key;
generating, at the user terminal, a first signature value by digitally signing an authentication message including the random number and the second public key with the first private key;
receiving, at the service server, the authentication message, the first signature value, and the second public key from the user terminal and transmitting the authentication message, the first signature value, and the second public key to the authentication server;
checking, at the authentication server, integrity of the second public key by verifying the first signature value using the first public key; and
in the event of a next authentication request of the user, performing, at the service server, authentication of a message related to the next authentication request using the second public key.

11. The authentication method of claim 10, further comprising, prior to the performing of the authentication of the message,
in the event of the next authentication request of the user, generating, at the user terminal, a second signature value by digitally signing a message preamble related to the next authentication request with the second private key; and
transmitting, at the user terminal, the message preamble and the second signature value to the service server,
wherein the authentication of the message is performed by verifying the second signature value using the second public key.

12. The authentication method of claim 10, further comprising, subsequent to the performing of the authentication of the message,
deleting, at the user terminal, the pair of the second private key and the second public key in response to an authentication request for the user to log out; and
generating, at the user terminal, a new pair of a second private key and a second public key in response to an authentication request for the user to log in.

13. The authentication method of claim 10, further comprising, subsequent to the performing of the authentication of the message, deleting, at the service server, the second public key in response to an authentication request for the user to log out.

14. An authentication method comprising:
receiving, at a service module, a random number from an authentication server in response to an authentication request of a user;
generating, at the service module, a pair of a second private key and a second public key that are distinguished from previously issued first private key and first public key;
generating, at an authenticator, a first signature value by digitally signing an authentication message including the random number and the second public key with the first private key;
transmitting, at the service module, the authentication message, the first signature value, and the second public key to the authentication server; and
when a message indicating that verification of the first signature value is completed is received from the authentication server, generating, at the service module, a second signature value by digitally signing a message preamble related to a next authentication request with the second private key in response to the next authentication request from the user.

15. The authentication method of claim 14, further comprising:
deleting, at the service module, the pair of the second private key and the second public key in response to an authentication request for the user to log out; and
generating, at the service module, a new pair of a second private key and a second public key in response to an authentication request for the user to log in.
